# EUROPÄISCHE PATENTSCHRIFT

(11) **EP 1 348 331 B1**
(45) Veröffentlichungstag und Bekanntmachung des Hinweises auf die Patenterteilung: **29.12.2004**
(21) Anmeldenummer: 03007070.0
(22) Anmeldetag: 27.03.2003
(51) Int. Cl.: A01F 12/34, B07B 1/46

(54) **Mähdrescher mit Lochsieb**
Harvester combine with sieve
Moisonneuse-batteuse avec tamis

(30) Priorität: 28.03.2002 DE 10214326; 27.09.2002 DE 10245448
(43) Veröffentlichungstag der Anmeldung: 01.10.2003
(73) Patentinhaber: Huning Umwelttechnik GmbH + Co. KG, 49326 Melle (DE)
(72) Erfinder: Huning, Walter, 49326 Melle (DE)
(74) Vertreter: Engelmann, Kristiana

(56) Entgegenhaltungen:
- DE-A- 1 632 892
- DE-A- 3 739 186
- DE-B- 1 171 196
- US-A- 1 381 718
- US-A- 2 642 993

## Beschreibung

Die vorliegende Erfindung bezieht sich auf einen Mähdrescher mit einer Siebvorrichtung zur Reinigung einer Erntegutfraktion. US-A-1 381 718 veröffentlicht ein Mähdrescher mit Siebvorrichtung gemäß dem Oberbegriff des Anspruchs 1.

Mähdrescher sind üblicherweise mit Lamellensieben ausgestattet, um dort das ausgedroschene Korn von Bruchstroh, Grannenhaaren und sonstigen Verunreinigungen zu reinigen. Die herkömmlichen Lamellensiebe weisen jedoch eine Reihe von Nachteilen auf. Die Siebe setzen sich leicht mit Strohhalmen zu, die dann die verfügbare Siebfläche verschließen. In feuchten Ernteverhältnissen kleben eiweißhaltiges Erntegut, Lehm und Blattbestandteile an den Sieblamellen fest und verstopfen die Sieböffnungen. Bei aller Verschmutzungsanfälligkeit sind die Siebe zudem schwer zu reinigen. Die Verstellvorrichtung der Sieböffnungsweite ist aufwendig, da mit der Betätigung eines einzelnen Hebels eine größere Anzahl von Einzellamellen in ihrer Winkellage zuverlässig umgestellt werden müssen. Die Sieböffnungen sind nur in einem begrenzten Bereich verstellbar, weshalb für manche Sonderfrüchte die herkömmlichen Lamellensiebe mit großem Aufwand ausgebaut und gegen andere Siebe ersetzt werden müssen. Schließlich ist das Sieb ein schweres Bauteil, das mit Hilfe eines Siebrahmens in der Karosse eines Mähdreschers befestigt werden muß. Der Siebrahmen muß dabei so kräftig dimensioniert werden, daß trotz der oszillierenden Bewegungen, die das Sieb während der Arbeit ausführt, alle Lamellen sicher in der gewünschten Position gehalten sind. Aufgrund des Gewichtes des Siebes müssen auch die Lagerungen und Antriebe für die Siebe entsprechend kräftig und aufwendig dimensioniert sein.

Es ist Aufgabe der vorliegenden Erfindung, die Funktionen der Siebeinrichtung eines Mähdreschers zu verbessern.

Die Aufgabenstellung wird gelöst, indem die Siebvorrichtung aus mindest zwei aufeinanderliegenden Siebelementen besteht, die Sieblöcher aufweisen und zur Veränderung des Durchsiebungsgrades gegeneinander verschiebbar angeordnet sind, wobei die Siebelemente mittels Spannvorrichtungen aufeinandergedrückt gehalten sind.

Indem zumindest ein Sieb aus zwei oder mehreren aufeinanderliegenden Sieblöcher aufweisenden Siebelementen gebildet ist, die gegeneinander verschiebbar angeordnet sind, kann durch Verschiebung dieser Siebelemente ein unterschiedlicher Öffnungsgrad des Siebes erhalten werden. Sofern die Siebelemente beispielsweise Sieblöcher identischer Geometrie aufweisen, erhält das verstellbare Sieb bei Anordnung der Sieblöcher genau übereinander die maximale Öffnungsweite, die durch Verschiebung der Lage der Siebelemente relativ zueinander verringert wird, bis die Sieblöcher der Siebelemente im Extremfall so gegeneinander verschoben sind, daß nicht gelochte Bereiche des einen Siebelementes jeweils die Löcher des anderen Siebelementes abdecken, so daß das Sieb vollständig geschlossen ist. Das Sieb muß jedoch nicht so ausgelegt sein, daß ein vollständiger Verschluß des Siebs einstellbar ist: je nach Anwendungsfall kann es genügen, ein einzelnes gemeinsames Siebloch zu verkleinern oder ein größeres gemeinsames Siebloch in mehrere kleinere Sieblöcher zu unterteilen. Die Sieblöcher eines Siebelementes können untereinander verschiedene Geometrien aufweisen und gleichmäßig oder ungleichmäßig über die Siebfläche verteilt sein, gleiches gilt für Sieblöcher verschiedener Siebelemente.

Zur Verstellung des Siebes ist es nicht mehr erforderlich, die kompletten Siebe auszutauschen, um damit auch Sonderfrüchte dreschen zu können. Insbesondere kann die Verschiebung der Siebelemente gegeneinander auch während des Erntevorganges bei laufender Maschine vorgenommen werden. Eine kontinuierliche Optimierung der Maschineneinstellung im Hinblick auf die herrschenden Ernteverhältnisse ist dadurch möglich.

Die Größe und Form der Sieblöcher der gegeneinander verschiebbaren Siebelemente ist für eine derartige Siebvorrichtung bedarfsgerecht auswählbar, so daß sich prinzipiell eine nahezu unbegrenzte Vielfalt von Öffnungsgeometrien erzeugen läßt. Dabei können die Sieblöcher der aufeinanderliegenden Siebelemente entweder gleiche Formen, Größe und Anordnung aufweisen oder aber sich in ihrer Form, Größe und/oder Anordnung von den Löchern des benachbarten Siebelementes unterschieden, und auch ein einzelnes Siebelement kann unterschiedliche Lochgrößen, Geometrien und Anordnungen aufweisen.

Weitere Vorteile ergeben sich bei der Reinigung des Siebes: die Sieblöcher sind prinzipiell weniger anfällig für Verschmutzungen und verhakte Strohhalme, da die Siebe flach ausgestaltet sind und wenig Ansatzpunkte bieten, an denen Material anhaften oder sich verhaken kann. Sobald sich Sieblöcher trotzdem zugesetzt haben sollten, genügt es, die aufeinanderliegenden Siebelemente relativ zu einander zu verschieben, um dadurch die Siebe zu reinigen. Bei einer Relativbewegung schleifen die Kanten der Sieblöcher über die Fläche des darunterliegenden Siebelementes und schälen so festgesetzten Schmutz von der Oberfläche des entsprechenden Siebes ab. Durch den Reinigungshub, der auch mehrfach vorgenommen werden kann, scheren die Lochkanten die Verschmutzungen von den Siebelementen ab, wonach diese zu Boden fallen. Eine Siebreinigung ist deshalb leicht durchführbar.

Spannvorrichtungen erfüllen eine wichtige Aufgabe für die Funktionen und Dauerhaltbarkeit der Lochsiebe. Durch das Zusammendrücken der Siebelemente wird verhindert, daß sich Schmutz zwischen die aufeinanderliegenden Bleche setzen kann. Auf diese Weise wird ein Ausbeulen der Bleche und die Ausbildung von Taschen, in denen sich zunehmend Schmutz ansammelt, vermieden. Bei ausreichender Pressung durch die Spannvorrichtungen können die Seitenkanten der Sieblöcher Schmutzansammlungen auf der Rückseite des angehaltenen anderen Siebelementes sauber abscheren und an Lochkanten des anderen Siebelementes scherenartig abschneiden.

Bei den oszillierenden Bewegungen der Siebe im Mähdrescher weisen die erfindungsgemäßen Lochsiebe ein stabileres Schwingungsverhalten auf im Vergleich zu den herkömmlichen Lamellensieben, die teilweise aus sehr filigranen Bauelementen zusammengefügt sind.

Zudem können Lochsiebe leichter und billiger gebaut werden, da man auf einen separaten Rahmen verzichten kann, die Verstellvorrichtung weniger aufwendig baut und weniger bewegte Teile montiert werden müssen.

Weitere Einzelheiten und Vorteile ergeben sich aus den Merkmalen der Unteransprüche und den Ausführungsbeispielen zu der Erfindung, die im folgenden näher dargestellt sind. Es zeigen:
- Fig. 1:: den Grundaufbau eines Mähdreschers,
- Fig. 2:: eine Sicht von Oben auf ein Mähdreschersieb,
- Fig. 3:: eine Querschnittsdarstellung entlang der Linie AA in Fig. 2,
- Fig. 4:: eine Längsschnitt durch ein Mähdreschersieb,
- Fig. 5:: eine Sicht von oben auf ein Siebelement,
- Fig. 6:: ein Querschnitt durch ein Randstück eines Siebelements,
- Fig. 7:: eine Seitenansicht auf eine Verstell-Lasche,
- Fig. 8:: eine Sicht von oben auf ein rahmenloses Siebelement mit Siebaufhängung,
- Fig. 9:: eine Detailansicht einer Siebaufhängung mit einer Haltegabel,
- Fig. 10 - 12:: verschiedene Detailansichten einer Haltegabel,
- Fig. 13 A - C:: verschiedene Lochbilder von Siebelementen mit Langlöchern,
- Fig. 14 A - D:: verschiedene Lochbilder von Siebelementen mit Rauten,
- Fig. 15 A - D:: verschiedene Lochbilder von Siebelementen mit Langlöchern,
- Fig. 16 A - D:: verschiedene Lochbilder von Siebelementen mit Langlöchern,
- Fig. 17 A - E:: verschiedene Lochbilder von Siebelementen mit Rundlöchern,
- Fig. 18 A - D:: verschiedene Lochbilder von Siebelementen mit elliptischen Löchern,
- Fig. 19 A - C:: verschiedene Lochbilder von Siebelementen mit quadratischen Löchern,
- Fig. 20 A - C:: verschiedene Lochbilder von Siebelementen mit dreieckigen Löchern.

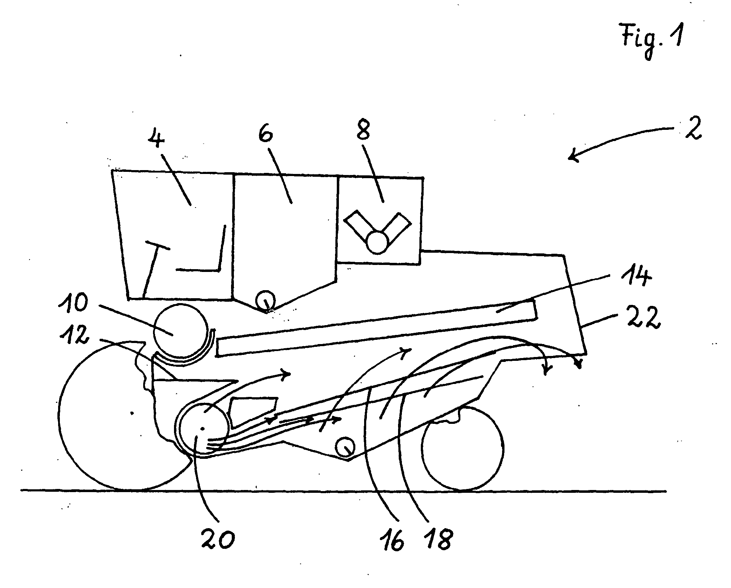

In Fig. 1 ist ein Mähdrescher 2 mit einer Fahrerkabine 4, einem Korntank 6 und einem Motorenaufbau 8 gezeigt. Mit der Dreschtrommel 10 wird ein Großteil des Getreides ausgedroschen und fällt auf den Vorbereitungsboden 12. Restkörner, die noch dem Stroh und den Ähren anhaften, werden durch eine der Dreschtrommel 10 nachgeschaltete Trenneinrichtung - im Ausführungsbeispiel den Schüttlern 14 - aus dem Stroh ausgeschieden und fallen auf das unterhalb der Trenneinrichtung angeordnete Obersieb 16. Auch der Vorbereitungsboden 12 fördert das von der Dreschtrommel 10 abgeschiedene körnige Erntegut über zwei Fallstufen auf das Obersieb 16. Das Obersieb 16 sowie das Untersieb 18 wird von einem Windstrom durchflutet, der von einem Gebläse 20 erzeugt wird. Der Wind ist in Fig. 1 durch Pfeile symbolisch dargestellt. Da das Maschinengehäuse unterhalb der Siebe 16, 18 geschlossen ist, kann der von dem Gebläse 20 erzeugte Wind fast ausschließlich durch Sieböffnungen des Unter- und Obersiebs 16, 18 in den Bereich der Strohausfallhaube 22 gelangen. Im Bereich der Sieböffnungen erfolgt die Sichtung zwischen den Körnern des Ernteguts und den Schmutzbestandteilen: während die schwereren Körner im Bereich der Sieböffnungen nach unten fallen, werden die leichteren Nicht - Korn-Bestandteile wie Bruchstroh, Spreu, Ähren und sonstige Verschmutzungen vom Gebläsewind erfaßt und in den Bereich der Strohausfallhaube 22 geblasen. Diese Sichtung funktioniert nur dann, wenn die Windstärke und die Öffnungsweite des Siebloches zur Korngröße des Erntegutes in einem angemessenen Verhältnis stehen. Ist die Sieböffnung zu groß und der Wind zu schwach, funktioniert die Reinigung nicht. Ist das Loch zu klein und der Wind zu stark, werden nicht nur die Schmutzbestanteile fort geblasen, sondern auch die Körner des Erntegutes. Die passende Größe der Sieböffnungen hat deshalb einen entscheidenden Einfluß auf die Qualität des Reinigungsergebnisses in einem Mähdrescher. In Mähdreschern mit einer hohen Abschneideleistung und gleichzeitig hohem Anfall von Bruchstroh ist die Reinigung gleichzeitig der leistungsbegrenzende Faktor des Mähdreschers. Deshalb kann die Arbeitsleistung des Mähdreschers insgesamt deutlich gesteigert werden, wenn es gelingt, die Reinigungsleistung zu verbessern.

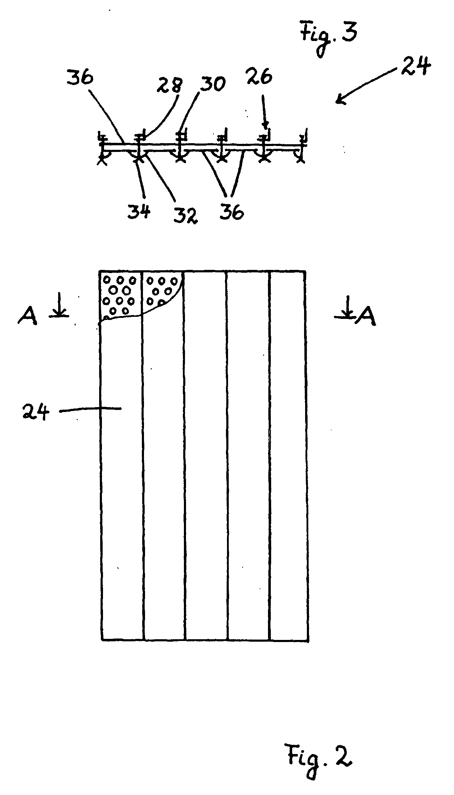

In Fig. 2 ist eine Siebbaugruppe 24 in einer Sicht von oben dargestellt. Die Sieblochung ist in der linken oberen Ecke der Siebbaugruppe 24 beispielhaft dargestellt. Die Siebbaugruppe 24 ist in Längsrichtung in fünf Teilflächen untergliedert. Jede Teilfläche erstreckt sich über die volle Länge der Siebbaugruppe 24. Die Unterteilung einer Siebfläche in mehrere Siebelemente 36 muß nicht in Längsrichtung des Mähdreschers 2, sondern kann auch quer zur Längsachse des Mähdreschers 2 erfolgen. Bei einer solchen Anordnung ist es möglich, bei gleicher Lochgeometrie und unterschiedlicher relativer Stellung der einzelnen Siebelemente zueinander unterschiedliche Öffnungsweiten der Sieblöcher einzustellen. Unterschiedliche Öffnungsweiten über die Länge des Siebes verteilt können auch durch unterschiedliche Lochgrößen bei gleicher oder unterschiedlicher relativer Lage der Siebelemente 36 erzielt werden.

In Fig. 3 ist ein schematischer Querschnitt durch die in Fig. 2 dargestellte Siebbaugruppe entlang der Linie AA zu sehen. Wie den zeichnerischen Details zu entnehmen ist, wird die Siebbaugruppe 24 von Spannelementen 26 zusammengehalten, die aus Profilblechen 28, Schraubbolzen 30, Tellerfeder 32 und Flügelschraube 34 bestehen. Während das oben liegende Siebelement 36 als einteiliges Flächenelement ausgebildet ist, decken die fünf unten liegenden Siebelemente 36 jeweils eine Fläche ab, die jeweils einer Teilfläche der in Fig. 2 gezeigten Siebbaugruppe 24 entspricht. Durch das Anziehen der Flügelschrauben 34 werden die Tellerfedem auf die unten liegenden Siebelemente 36 angepreßt. Gleichzeitig werden die Profilbleche 28, die als L-Profile gezeigt sind, mit ihrer Unterseite auf die Oberfläche des oberen Siebelementes 36 gepreßt. Die aufragenden Schenkel der Profilbleche 28 bilden Stege aus, die die Teilflächen der Siebfläche von einander abgrenzen. Damit sind diese Bauteile der Spannelemente 26 so ausgebildet, daß sie bei Arbeiten des Mähdreschers am Hang ein seitliches Verrutschen des Ernteguts auf der Siebfläche über die volle Breite des Siebes vermeiden helfen. Bauteile der Spannelemente 26 dienen so als Leitelemente zur Beförderung des über die Siebbaugruppe 24 bewegten Erntegutes in die Förderrichtung.

Abweichend vom in Fig. 2 gezeigten Ausführungsbeispiel kann der Grundaufbau der Spannelemente 26 auch variiert werden. Anstelle von Tellerfedern können auch Spiralfedern, Gummipuffer, Kunststoff-Unterlegscheiben oder ähnliche Spannelemente verwendet werden, die geeignet sind, die einzelnen Siebelemente 36 aufeinander zu drücken. Anstelle einer Flügelschraube können auch andere Schrauben oder Befestigungselemente benutzt werden. Die Anpreßkraft kann auch durch Spannbügel, Hebelverschlüsse oder sonstige geeignete Verschlußarten hergestellt werden.

In Figur 3 sind das obere Siebelement 36 sowie die unteren Siebelemente 36 beabstandet zu einander dargestellt, diese Darstellung wurde jedoch nur aus Gründen der Klarheit der Zeichnung gewählt. Tatsächlich ist es so, daß das obere Siebelement 36, die unteren Siebelemente 36, die Tellerfedern 32 und die Profibleche 28 eng aufeinander gepreßt liegen. Die Spannelemente 26 sind dabei jeweils zwischen zwei benachbarten unteren Siebelementen 36 angeordnet. Bei einer Längsverschiebung der unteren Siebelemente 36 zur Veränderung der Lochgröße des Siebes können die Schraubbolzen 30 bei seitlicher Anlage an die unteren Siebelemente 36 als Schiebeführung dienen.

In einer alternativen Ausgestaltung können die Spannelemente 26 auch so angeordnet sein, daß sie nicht durch einen Zwischenraum zwischen zwei benachbart liegenden Blechen hindurchgeführt sind, sondern durch zumindest zwei aufeinanderliegenden Siebelementen 36 hindurch greifen. Bei einer Ausnehmung im verstellbaren Siebelement 36 in Langlochform ist ebenfalls eine Führung dieses Siebelementes 36 über den Verstellweg gewährleistet.

Für den jeweiligen Anwendungsfall kann frei entschieden werden, ob die oberen Siebelemente 36 oder die unteren Siebelemente 36 geteilt ausgeführt sein sollen, soweit eine Teilung der Siebfläche gewünscht ist.

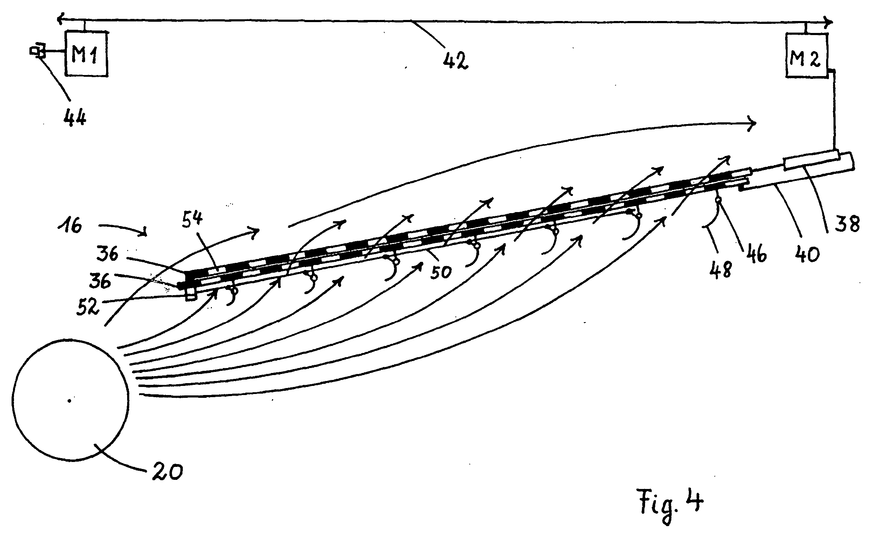

In Fig. 4 ist ein Querschnitt durch ein Mähdreschersieb in Form des Obersiebes 16 gezeigt. Das Untersieb ist aus Vereinfachungsgründen nicht dargestellt. Das Obersieb 16 wird vom Gebläse 20 mit Wind beaufschlagt, der mittels Pfeilen dargestellt ist. Die oberen oder unteren Siebelemente 36 sind mittels eines Hydraulikzylinders 38 motorisch verstellbar, der mittels einer Konsole 40 an dem unteren Siebelement 36 befestigt ist. Statt des Hydraulikzylinders 38 können auch andere Stellantriebe wie beispielsweise Elektromotoren eingesetzt werden.

Im Ausführungsbeispiel wird die Verstellung des Hydraulikzylinders 38 über ein Bus-Netz 42 aktiviert, indem durch Betätigung eines Schalter 44 ein Stellsignal über den Mikroprozessor M1 in das Bus-Netz 42 eingestellt wird, das vom Mikroprozessor M2 lesbar ist. Bei Empfang eines entsprechenden Stellbefehls steuert der Mikroprozessor M2 ein nicht näher dargestelltes Proportionalventil an, bei dessen Betätigung sich der Hydraulikzylinder 38 vor- oder zurückbewegt. Durch eine Positionserkennung, die auch nicht näher dargestellt ist, kann der Mikroprozessor M2 kontrollieren, in welcher Stellposition sich der Hydraulikzylinder 38 befindet. Da die aktuelle Position der Kobenstange des Hydraulikzylinders 38 einer bestimmten Öffnungsweite der gemeinsamen Lochfläche entspricht, die die Sieblöcher des oberen und unteren Siebelementes gemeinsam bilden, ist über die Positionserkennung des Kolbenstange des Hydraulikzylinders 38 die fernbetätigte Einstellung eines gewünschten Istwertes der Sieböffnungsweite möglich. Der Bediener des Mähdreschers muß also den Ernteeinsatz seiner Maschine nicht unterbrechen, um die Sieböffnungsweite an die herrschenden Erntebedingungen anzupassen.

Genauso ist es möglich, durch Betätigung des Schalters 44 das obere Siebelement 36 ein- oder mehrmals um einen Hubweg zu verstellen, um das Sieb zu reinigen. Auch eine solche Siebreinigung kann bei laufender Erntefahrt vorgenommen werden. Die Sieblöcher 54, die jedes Siebelement 36 aufweist, können durch die Verstellbewegung in unterschiedlicher Lage aufeinander zu liegen kommen.

Auf der Unterseite des unteren Siebelementes 36 sind Gelenke 46 angebracht, an denen Windleiteinrichtungen 48 befestigt sind. Die Windleiteinrichtungen 48 dienen dazu, den aus Richtung des Gebläses 20 anströmenden Wind in die Sieböffnungen umzulenken. Die Windleiteinrichtungen 48 bestehen bevorzugt aus Leitblechen, die in einer schrägen Winkeleinstellung zum anströmenden Wind angeordnet sind. Anstelle von rundgebogenen Leitblechen können auch eckig gekantete oder flache Leitbleche eingesetzt werden.

In einer Ausgestaltung sind die Windleiteinrichtungen 48 zumindest teilweise mit einer Koppelstange 50 verbunden, deren Lage durch einen Stellmotor 52 verändert werden kann. Auf diese Weise ist es möglich, die Winkeleinstellung der Leitbleche und damit die Anströmung der Sieböffnungen mit dem Wind zu verändern. Der Stellmotor 52 kann in der gleichen Weise wie der Hydraulikzylinder 38 fernbetätigbar ausgebildet sein, es sind jedoch auch manuelle oder automatisierte Verstellösungen möglich.

In einer optimal automatisierten Siebeinrichtung wird durch ein Software-Programm, das von dem Optimierungskriterium einer minimalen oder ausgewählten Verlustmenge, einem ausgewählten Reinheitsgrad des Ernteguts, der Durchsatzleistung oder einer Kombination dieser Optimierungsgrößen ausgeht, gezielt die Drehzahl des Gebläses 20, die Sieböffnungsweite und die Position der einzelnen Leitbleche der Windleiteinrichtungen 48 optimal aufeinander abstimmt.

Anstelle einer Befestigung der Windleiteinrichtung 48 auf der Unterseite eines Siebelementes 36 kann die Windleiteinrichtung 48 auch an anderen Teilen des Mähdreschers befestigt sein. Auch die Form und die Abmessung der einzelnen Leitbleche kann über die Länge der Siebeinrichtung gesehen variieren. Da der Luftstrom um so schwächer wird, je weiter er vom Gebläse 20 entfernt ist, ist es vorteilhaft, im vorderen Bereich der Siebeinrichtung eher einen kleineren Teil des Windes umzulenken, damit im hinteren Teil der Siebeinrichtung bei geringerem Druck oder niedriger Strömungsgeschwindigkeit trotzdem noch ein ausreichendes Volumen verfügbar ist, um eine zufriedenstellende Reinigungswirkung auch auf den hinteren Siebflächen zu ermöglichen.

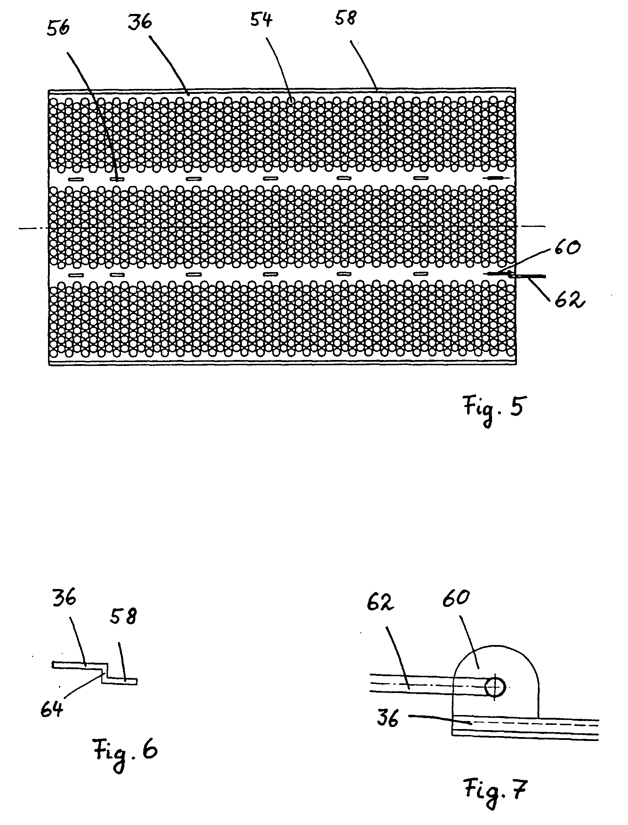

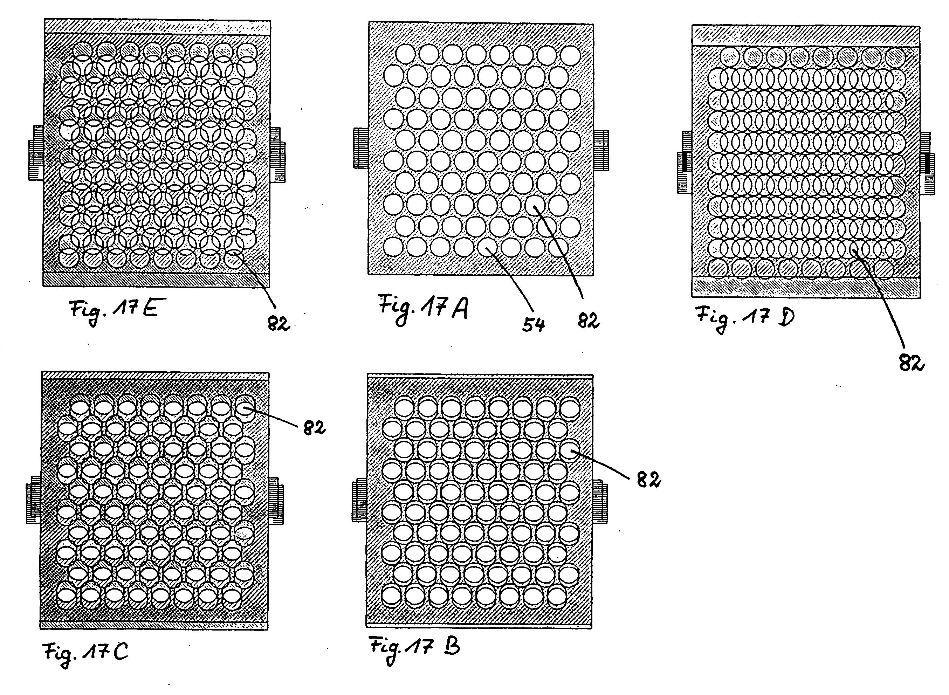

In Fig. 5 ist ein Siebelement 36 aus einer Sicht von oben dargestellt. Das Siebelement 36 weist Sieblöcher 54, Langlöcher 56 sowie Abkantungen 58 auf. Die Abkantungen 58 sind seitlich zur Stabilisierung des Siebelementes 36 ausgebildet. An Stelle der Abkantungen 58 oder zusätzlich zu diesen können auch Abkantungen - beispielsweise in U-Form - im mittleren Bereich des Siebelementes 36 in Längsrichtung vorgesehen sein, oder Abkantungen 58 erstrecken sich in Querrichtung zum Siebelement 36. Die Langlöcher 56 lassen im Ausführungsbeispiel nur eine begrenzte Bewegung um die Längsachse zu, das Langloch 56 kann jedoch auch so ausgestaltet sein, daß eine Querbewegung oder eine kombinierte Längs-/Querbewegung ermöglicht wird. Im Ausführungsbeispiel sind die Sieblöcher 54 kreisrund und versetzt zueinander ausgebildet. Im Falle einer Verschiebung eines solchen Siebelementes 36 relativ zu einem zweiten, darüber oder darunter liegenden Siebelement 36 mit identischem Lochbild ergeben sich gemeinsame Lochbilder, die in den Figuren 17A bis 17 E dargestellt sind.

In Fig. 6 ist erkennbar, daß durch den Stabilisierungssteg 64, der die Sieboberfläche des Siebelementes 36 mit der abgestuften Abkantung 58 verbindet, das Siebelement 36 insgesamt stabilisiert wird.

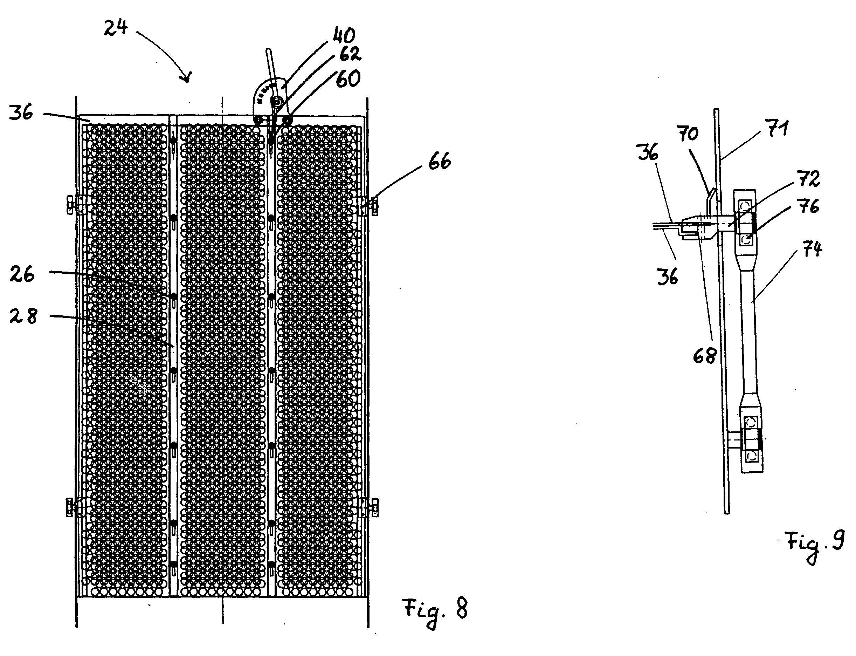

In Figur 7 ist in einer Seitenansicht die Verstell-Lasche 60 gezeigt, die auch in Fig. 5 eingezeichnet ist. Die Verstell-Lasche 60 ist fest mit dem Siebelement 36 verbunden. An die Verstell-Lasche 60 greift ein Verstellhebel 62 an, über den Schub- oder Zugbewegungen einer manuellen oder motorischen Verstellvorrichtung auf das Siebelement 36 übertragen werden können.

In Fig. 8 ist an einer Konsole 40 ein manueller Verstellhebel gezeigt, der eine Verstellbewegung über den Verstellhebel 62 auf die Verstell-Lasche 60 und das daran befestigte Siebelement 36 überträgt. Im Ausführungsbeispiel ist die Siebbaugruppe 24 an einer Siebaufhängung 66 rahmenlos aufgehängt. Durch den Verzicht auf einen separaten Tragrahmen kann die Siebbaugruppe 24 insgesamt leichter und kostengünstiger hergestellt werden. Mit der Siebaufhängung 66 ist das feststehende Siebelement 36 fest verbunden, das feststehende Siebelement 36 übernimmt auf diese Weise die Tragfunktion eines Rahmens. Das an der Siebaufhängung 66 befestigte Siebelement 36 trägt auf diese Weise das verstellbare andere Siebelement 36 sowie die an der Siebbaugruppe 24 befestigte Verstellvorrichtung mit.

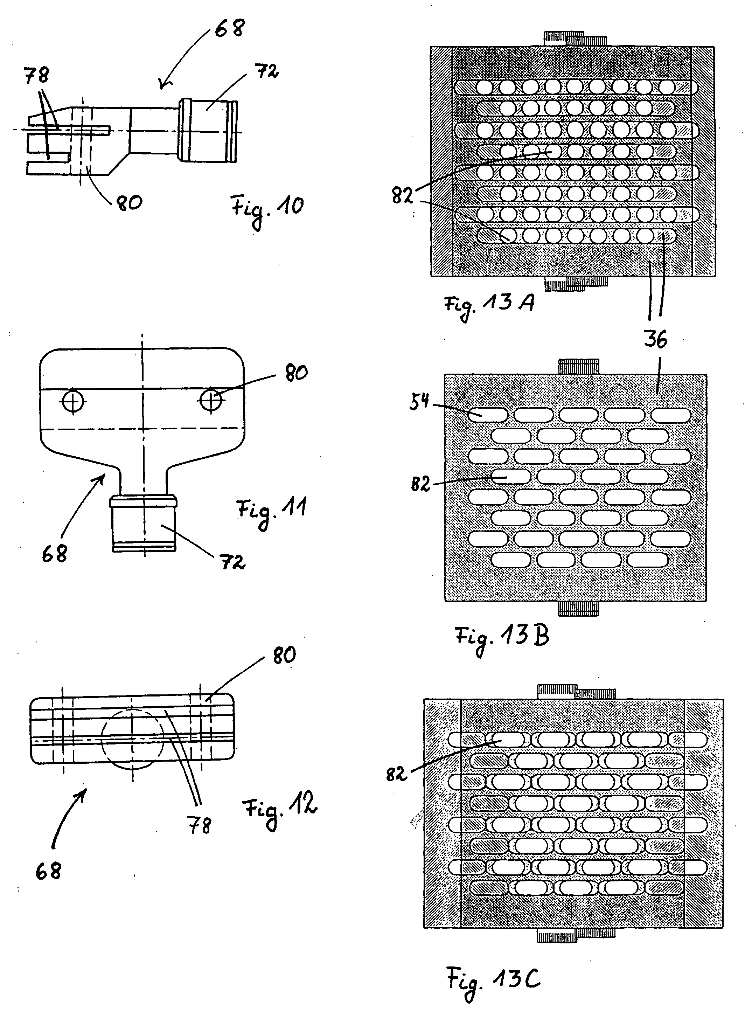

In Fig. 9 ist die Siebaufhängung 66 mit einem Koppelelement näher dargestellt. Ein zentrales Bauelement als Koppelelement ist die Haltegabel 68, an dem das Dichtgummi 70 befestigt ist, das den Siebraum gegen die Seitenwand 71 des Mähdreschers abdichtet. Durch eine Öffnung in der Seitenwand 71 ragt ein Achsstummel 72, der in dem im Schwinghebel 74 angeordneten Kugellager 76 befestigt ist. Auf der Seite der Siebe weist die Haltegabel 68 Steckschlitze 78 auf, die in Fig. 10 näher dargestellt sind. Die Siebelemente 36 können in diese Steckschlitze eingelegt werden. Wie in Fig. 10 gezeigt, ist ein Schraubloch 80 durch den für das obere Siebelement 36 vorgesehenen Steckschlitz 78 hindurchgeführt, um mittels einer Schraubverbindung das obere Siebelement 36 festzulegen. Da der untere Steckschlitz 78 kürzer ausgeführt ist, kann das verstellbare Siebelement 36 in dem Steckschlitz 78 hin und her gleiten. In den Figuren 11 und 12 sind Ansichten von oben und von der Seite auf die Haltegabel 68 dargestellt.

In den Figuren 13 sind verschiedene Lochbilder von Siebelementen 36 dargestellt, die Langlöcher aufweisen. Jedes Siebelement 36 weist Sieblöcher 54 auf, die dekkungsgleich ausgebildet sind. Übereinanderliegende Sieblöcher 54 der aufeinanderliegenden Siebelemente 36 bilden jeweils eine oder mehrere Sieböffnungen 82 aus. Die gemeinsam ausgebildeten Sieböffnungen 82 stellen jeweils einzelne und durch Stege zumindest eines Siebelementes 36 voneinander getrennte Öffnungen im Sieb dar, durch die Siebgut hindurchfallen kann. Während ein Siebloch 54 durch Teile eines anderen Siebelements 36 ganz oder teilweise verdeckt sein kann, ist mit dem Begriff Sieböffnung eine solche Öffnung gemeint, durch die Siebgut durch alle Ebenen von Siebelementen 36 frei hindurch fallen kann. Verändert man die relative Lage der aufeinanderliegenden Siebelemente 36 zueinander, verändert sich die Form und Größe der gemeinsamen Sieböffnungen 82. In Fig. 13 A ergeben sich im Verhältnis zu den Sieblöchern 54 stark verkleinerte Sieböffnungen 82, die eine kreisrunde Geometrie zeigen. In der in Fig. 13 C gezeigten relativen Lage der Siebelemente 36 sind die Löcher größer als in Fig. 13 A, jedoch kleiner als in Fig. 13 B.

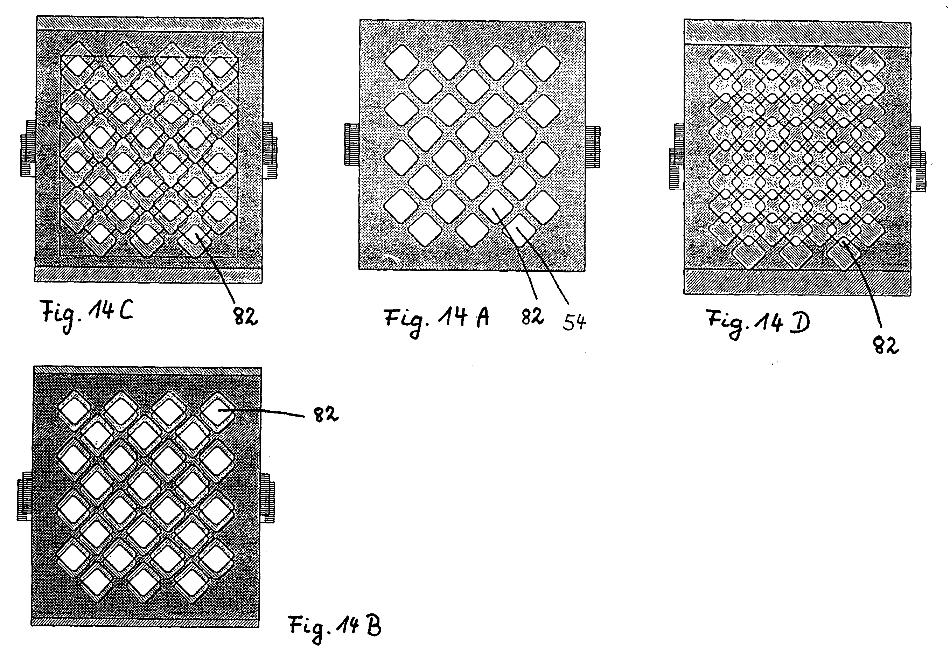

In den Figuren 14 sind Siebelemente 36 gezeigt, die Sieblöcher 54 in Rautenform aufweisen. Die Figur 14 A zeigt bei deckungsgleicher Lage der Sieblöcher 54 die größtmögliche Sieböffnung 82, während in Figur 14 B die gemeinsame Sieböffnung 82 schon verkleinert ist. In Figur 14 C ist die Sieböffnung nochmals verkleinert, wobei ein Siebloch 54 eines Siebelementes 36 zusätzlich zu der rautenförmigen verkleinerten Sieböffnung 82 weitere zwei gemeinsame Sieböffnungen ausbildet, die aus zwei schmalen Schlitzen bestehen. Ein Siebloch 54 bildet also mit drei anderen Sieblöchern 54 des anderen Siebelementes 36 drei gemeinsame Sieböffnungen 82 aus. In Fig. 14 D ist eine Stellung der Siebelemente 36 relativ zueinander gezeigt, in der ein Siebloch 54 eines Siebelementes 36 mit vier anderen Sieblöchern 54 des anderen Siebelementes 36 vier gemeinsame Sieböffnungen 82 ausbildet. Die unterschiedlichen Lochzahlen ergeben sich aus der seitlich versetzt zueinander angeordneten Lage der Löcher im Hinblick auf den Verschiebeweg eines oder mehrerer Siebelemente 36 relativ zueinander.

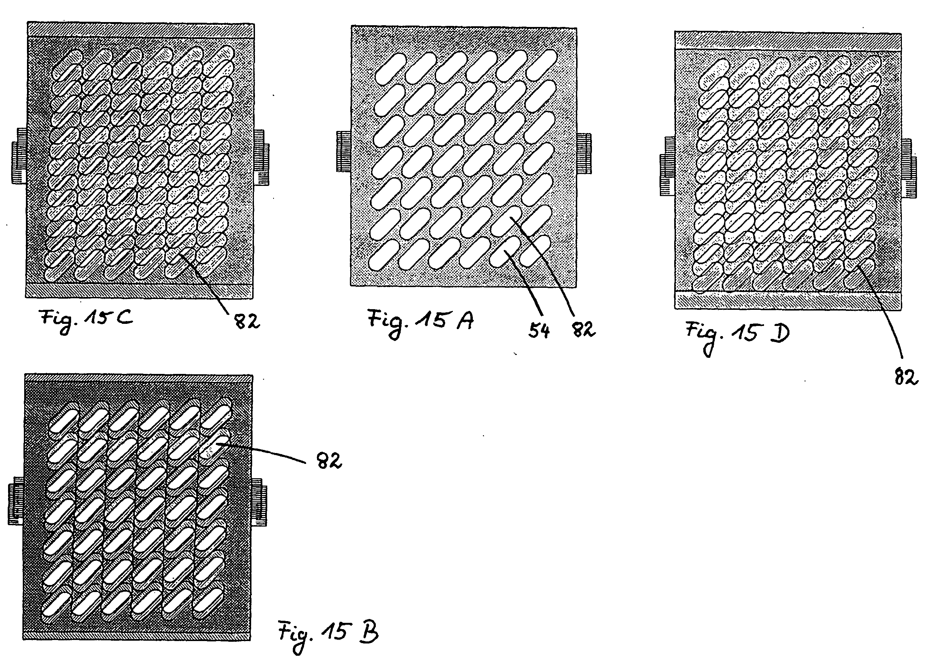

In Fig. 15 sind Siebelemente 36 mit diagonal angestellt angeordneten Langlöchern 54 gezeigt. Während die Fig. 15 A wieder die größtmögliche offene Fläche der Sieböffnungen 82 zeigt, verkleinert sich die Fläche der gemeinsamen Sieböffnungen 82 zunehmend über die Figuren 15 B, 15 C zu 15 D. In Fig. 15 D sind die eingestellten Sieböffnungen 82 unterschiedlich groß, wobei ein Siebloch wieder mit zwei anderen Sieblöchern des anderen Siebelementes 36 zwei gemeinsame Sieböffnungen 82 ausbildet.

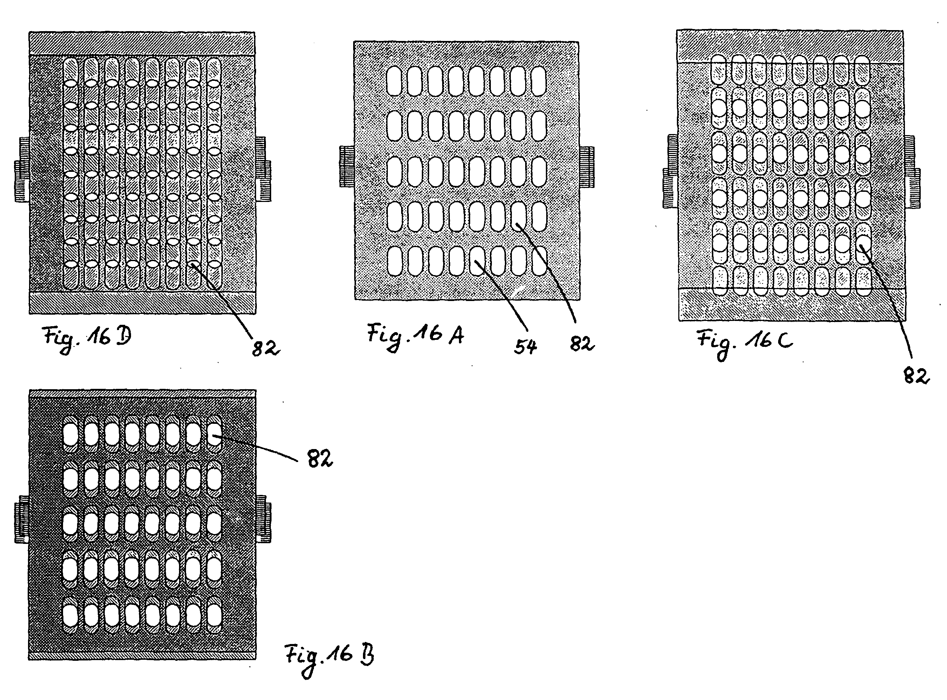

In den Figuren 16 sind Sieblöcher 54 in Längsrichtung zum Verstellweg der Siebelemente 36 gezeigt. Die gemeinsamen Sieböffnungen 82 verkleinern sich über die Darstellungen der Figuren 16 B, 16 C und 16 D.

In den Figuren 17 weisen die Siebelemente 36 kreisrunde Sieblöcher 54 auf. Da die Sieblöcher 54 versetzt zueinander in den Siebelementen 36 angeordnet sind, ergeben sich bei ausreichender Verstellung wieder mehrere gemeinsame Sieböffnungen 82 in einem Siebloch 54, wie in den Figuren 17 C bis 17 E gezeigt. Während in Figur 17 C jedes Siebloch 54 drei gemeinsame Sieböffnungen 82 aufweist, ergeben sich bei einer Verstellung zur Figur 17 D nur zwei gemeinsame Sieböffnungen, während in der Verstellsituation, die in Fig. 17 E gezeigt ist, wieder drei gemeinsame Sieböffnungen 82 zeigen.

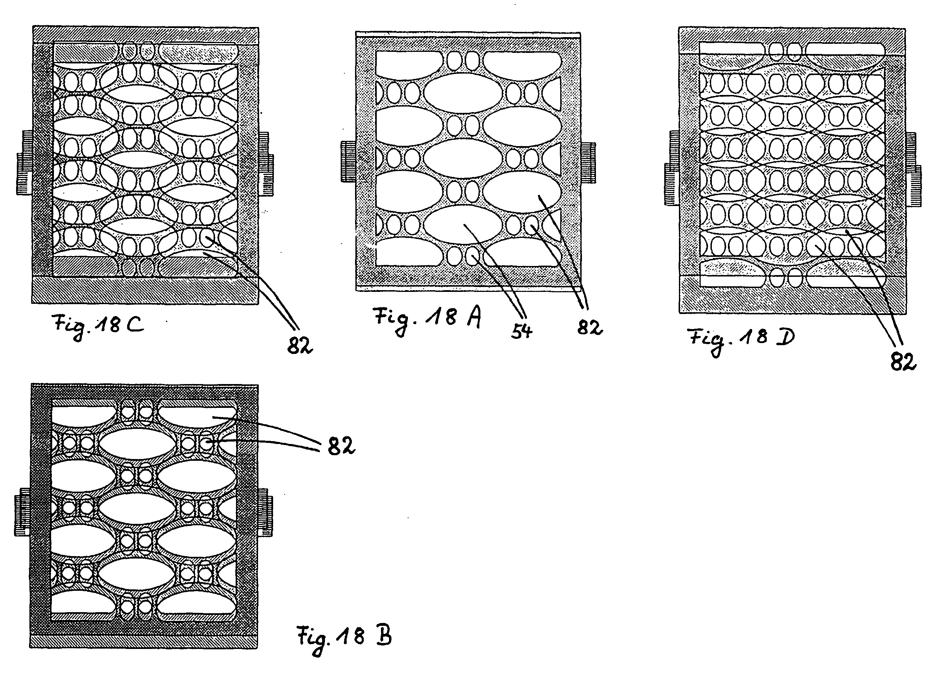

. Bei den in den Figuren 18 gezeigten elliptischen Sieblöchern 54 kann Erntegut mit unterschiedlichen Partikelgrößen ausgesiebt werden. Eine entsprechende Aussiebung ist beispielsweise bei Corn-Cob-Mix-Erntegut erwünscht. Und zwar sollen neben dem Körnermais auch in einem vorwählbaren Umfang Spindelteile der Maiskolben mit in den Korntank wandern, da diese Spindelanteile den Rohfasergehalt des Futters beinflussen. Während der Körnermais durch die kleineren Sieblöcher 54 fallen kann, können die größeren Spindeln durch die größeren Sieblöcher 54 fallen.

Sollen die Spindelanteile verringert werden, kann das Lochbild so verstellt werden, daß es den in Figur 18 B dargestellten Zustand zeigt. Sind nur noch ganz geringe Spindelanteile gewünscht, kann die in Fig. 18 C dargestellte Lochgröße eingestellt werden. Wird schließlich das in Fig. 18 D dargestellte Lochbild eingestellt, fallen nur noch die Maiskörner durch die Siebbaugruppe 24 hindurch, die Spindelanteile können durch die verkleinerten Lochgrößen nicht mehr hindurchfallen. Somit ist es nicht mehr erforderlich, unterschiedliche Siebe einzubauen, wenn die Maschine von Körnermais auf Corn-Cob-Mix umgestellt wird. Wegen der geringeren Umrüstungszeiten steigt dadurch die effektive Nutzungszeit der Maschine und damit die Schlagkraft deutlich an.

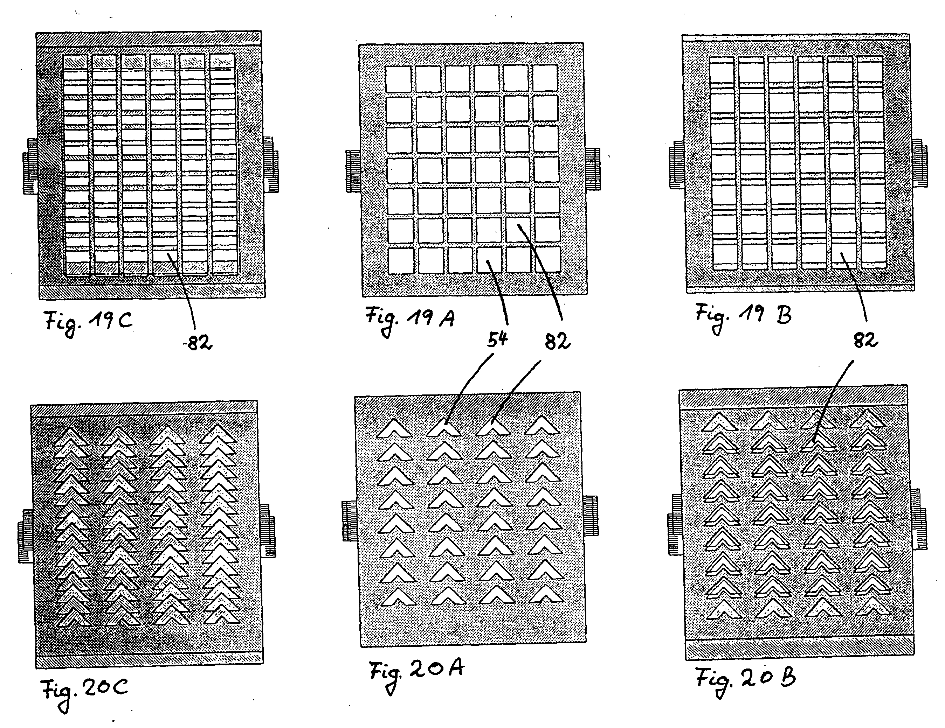

Die Figuren 19 A bis C sowie 20 A bis C zeigen unterschiedliche Lochbilder mit quadratischer bzw. dreieckiger Ausbildung der Sieblöcher 54.

In den Lochbildern der Figuren 13 bis 20 sind beispielhaft unterschiedliche Lochformen und -größen gezeigt. Die Varianz der Lochgrößen und -formen kann nochmals gesteigert werden, wenn die Siebelemente 36 nicht nur in einer Richtung verstellbar ausgebildet sind.

## Patentansprüche

1. Mähdrescher (2) mit Siebvorrichtung zur Reinigung einer Erntegutfraktion wobei die Siebvorrichtung aus mindestens zwei aufeinanderliegenden Siebelementen (36) besteht, die Sieblöcher aufweisen und zur Veränderung des Durchsiebungsgrades gegeneinander verschiebbar angeordnet sind **dadurch gekennzeichnet, daß** die Siebelemente (36) mittels Spannelementen (26) aufeinandergedrückt gehalten sind.

2. Mähdrescher (2) nach Anspruch 1, **dadurch gekennzeichnet, daß** die Siebelemente (36) ein Sieblochbild zeigen, durch das in einer Lage der Siebelemente (36) übereinander liegende Sieblöcher der Siebelemente (36) eine gemeinsame Sieböffnung (82) bilden und das gleiche Siebloch eines Siebelements (36) bei einer anderen Lage der Siebelemente (36) relativ zueinander mit mehreren Sieblöchern des anderen Siebelements (36) mehrere Sieböffnungen (82) ausbilden.

3. Mähdrescher nach Anspruch 1 oder 2, **dadurch gekennzeichnet, daß** eine Siebfläche in mindestens einer Ebene durch mehrere Siebelemente (36), die nebeneinander angeordnet sind, unterteilt ist.

4. Mähdrescher (2) nach Anspruch 3, **dadurch gekennzeichnet, daß** zwischen benachbarten Siebelementen (36) Teile zumindest eines Spannelementes (26) angeordnet sind, das Siebelemente (36) aufeinandergedrückt hält.

5. Mähdrescher (2) nach einem der vorhergehenden Ansprüche, **dadurch gekennzeichnet, daß** auf dem oberen Siebelement (36) eines oder mehrere aufstehende Profilbleche (28) angeordnet sind.

6. Mähdrescher (2) nach einem der vorhergehenden Ansprüche, **dadurch gekennzeichnet, daß** ein Spannelement (26) durch mindestens zwei aufeinander liegende Siebelemente (36) hindurch geführt ist und das verstellbare Siebelement (36) ein Langloch (56) zur Führung der Verstellbewegung aufweist.

7. Mähdrescher (2) nach einem der vorhergehenden Ansprüche, **dadurch gekennzeichnet, daß** die Spannkraft der Spannelemente (26) so gewählt ist, daß die Siebelemente (36) während des Normalbetriebs des Mähdreschers (2) ortsfest aufeinander liegen, jedoch bei Einwirken einer Verstellkraft auf zumindest eines der Siebelemente (36) eine Relativbewegung zwischen aufeinanderliegenden Siebelementen (36) zulassen.

8. Mähdrescher (2) nach einem der vorhergehenden Ansprüche, **dadurch gekennzeichnet, daß** die Spannkraft, die ein Spannelement (26) auf Siebelemente (36) ausübt, variabel ist.

9. Mähdrescher (2) nach einem der vorhergehenden Ansprüche, **dadurch gekennzeichnet, daß** die Siebverstellung durch Betätigung eines motorischen Antriebs (38) erfolgt.

10. Mähdrescher (2) nach Anspruch 9, **dadurch gekennzeichnet, daß** der motorische Antrieb (38) an einem Siebelement (36) oder an einem Rahmen eines Siebelements (36) befestigt ist.

11. Mähdrescher (2) nach den Ansprüchen 9 oder 10, **dadurch gekennzeichnet, daß** der motorische Antrieb (38) fernbetätigbar ist.

12. Mähdrescher (2) nach einem der vorhergehenden Ansprüche, **dadurch gekennzeichnet, daß** zwischen einem Gebläse (20) und den Siebelementen (36) eine Windleiteinrichtung (48) angeordnet ist, die den vom Gebläse erzeugten Windstrom in die Richtung der Sieböffnungen der Siebelemente (36) umlenkt.

13. Mähdrescher (2) nach Anspruch 13, **dadurch gekennzeichnet, daß** die Windleiteinrichtung (48) verstellbar ist.

14. Mähdrescher (2) nach einem der Ansprüche 12 oder 13, **dadurch gekennzeichnet, daß** die Verstellung der Windleiteinrichtung (48) motorisch, bevorzugt fernbetätigbar, erfolgt.

15. Mähdrescher (2) nach einem der Ansprüche 12 bis 14, **dadurch gekennzeichnet, daß** die Windleiteinrichtung (48) an der Siebbaugruppe befestigt ist.

16. Mähdrescher (2) nach einem der Ansprüche 12 bis 15, **dadurch gekennzeichnet, daß** mehrere Windleiteinrichtungen (48) über die Länge der Siebbaugruppe verteilt angeordnet sind.

17. Mähdrescher (2) nach einem der Ansprüche 12 bis 16, **dadurch gekennzeichnet, daß** die Windleiteinrichtungen (48) unterschiedliche Abmessungen und/oder Geometrien aufweisen.

18. Mähdrescher (2) nach einem der vorhergehenden Ansprüche, **dadurch gekennzeichnet, daß** zumindest ein Siebelement (36) durch Abkantungen (58) und/oder zusätzliche Profile verstärkt ist.

19. Mähdrescher (2) nach einem der vorhergehenden Ansprüche, **dadurch gekennzeichnet, daß** die Siebbaugruppe (24) rahmenlos über Koppelelemente (68), die direkt an zumindest einem Siebelement (36) befestigt sind, mit den maschinenseitigen Aufhängungselementen (74) verbunden ist.

20. Siebbaugruppe (24) mit einer Siebvorrichtung zum Einbau in einen Mähdrescher (2), **dadurch gekennzeichnet,** da**ß** die Siebvorrichtung aus mindestens zwei aufeinanderliegenden Siebelementen (36) besteht, die Sieblöcher aufweisen und zur Veränderung des Durchsiebungsgrades gegeneinander verschiebbar angeordnet sind, wobei die Siebelemente (36) mittels Spannelementen (26) aufeinandergedrückt gehalten sind.

## Claims

1. Combine harvester (2) having a screening arrangement for cleaning a part of harvested crops, the screening arrangement comprising at least two screen members (36) lying one on top of the other, which screen members (36) have screening holes and, to allow the proportion of material allowed to pass through to be varied, are arranged to be displaceable against one another, **characterised in that** the screen members (36) are pressed against one another by means of clamping members (26).

2. Combine harvester (2) according to claim 1, **characterised in that** the screen members (36) have a pattern of screening holes which, when the screen members (36) are in one position, causes screening holes which are in the screen members (36) and lie one above the other to form a common screening aperture (82) and, when the screen members (36) are in a different position relative to one another, causes the same screening hole in one screen member (36) to form a plurality of screening apertures (82) with a plurality of screening holes in the other screen member (36).

3. Combine harvester according to claim 1 or 2, **characterised in that** a screening surface is subdivided, in at least one plane, into a plurality of screen members (36) which are arranged next to one another.

4. Combine harvester (2) according to claim 3, **characterised in that**, arranged between adjacent screen members (36), are parts of at least one clamping member (36) which holds screen members (36) pressed against one another.

5. Combine harvester (2) according to one of the foregoing claims, **characterised in that** one or more upstanding profiled plates (28) are arranged on the top screen member (36).

6. Combine harvester (2) according to one of the foregoing claims, **characterised in that** a clamping member (26) passes through at least two screen members lying one on top of the other and the adjustable screen member (36) has a slotted hole (56) to guide the adjusting movement.

7. Combine harvester (2) according to one of the foregoing claims, **characterised in that** the clamping force of the clamping members (26) is selected to be such that, while the combine harvester (2) is operating normally, the screen members lie one on top of one another in fixed positions, but if a displacing force acts on at least one of the screen members (36), they permit a relative movement between screen members (36) lying one on top of the other.

8. Combine harvester (2) according to one of the foregoing claims, **characterised in that** the clamping force which a clamping member (26) exerts on screen members (36) is variable.

9. Combine harvester (2) according to one of the foregoing claims, **characterised in that** the adjustment of the screens is performed by actuating a motorised drive (38).

10. Combine harvester (2) according to claim 9, **characterised in that** the motorised drive (38) is fastened to a screen member (36) or to a frame of a screen member (36).

11. Combine harvester (2) according to claim 9 or 10, **characterised in that** the motorised drive (38) can be remotely actuated.

12. Combine harvester (2) according to one of the foregoing claims, **characterised in that**, arranged between a blower (20) and the screen members (36), is a directing means (48) for blown air which diverts the flow of blown air produced by the blower towards the screening apertures in the screen members (36).

13. Combine harvester (2) according to claim 12, **characterised in that** the directing means (48) for blown air is adjustable.

14. Combine harvester (2) according to either of claims 12 and 13, **characterised in that** the adjustment of the directing means (48) for blown air is performed by motorised means, preferably by remote actuation.

15. Combine harvester (2) according to one of claims 12 to 14, **characterised in that** the directing means (48) for blown air is fastened to the screening sub-assembly.

16. Combine harvester (2) according to one of claims 12 to 15, **characterised in that** a plurality of directing means (48) for blown air are arranged to be distributed over the length of the screening sub-assembly.

17. Combine harvester (2) according to one of claims 12 to 16, **characterised in that** the directing means (48) for blown air are of different dimensions and/or geometries.

18. Combine harvester (2) according to one of the foregoing claims, **characterised in that** at least one screen member (36) is reinforced by folds (58) and/or by additional profiles.

19. Combine harvester (2) according to one of the foregoing claims, **characterised in that** the screening sub-assembly (24) is connected to the suspension members (74) associated with the main machine without the use of a frame, via coupling members (68) which are fastened directly to at least one screen member (36).

20. Screening sub-assembly (24) having a screening arrangement, for fitting to a combine harvester (2), **characterised in that** the screening arrangement comprises at least two screen members (36) lying one on top of the other, which screen members (36) have screening holes and, to allow the proportion of material allowed to pass through to be varied, are arranged to be displaceable against one another, the screen members (36) being pressed against one another by means of clamping members (26).

## Revendications

1. Moissonneuse-batteuse (2) comportant un dispositif de tamisage destiné à nettoyer une fraction de récolte, le dispositif de tamisage étant constitué d'au moins deux éléments de tamis (36) superposés, lesquels présentent des trous de tamis et sont disposés de manière à pouvoir être déplacés l'un par rapport à l'autre en vue de modifier le degré de tamisage, **caractérisée en ce que** les éléments de tamis (36) sont maintenus pressés l'un sur l'autre au moyen d'éléments de serrage (26).

2. Moissonneuse-batteuse (2) selon la revendication 1, **caractérisée en ce que** les éléments de tamis (36) présentent une configuration de trous de tamis par laquelle les trous de tamis superposés des éléments de tamis (36) forment une ouverture de tamis (82) commune dans une position des éléments de tamis (36) et, dans une autre position des éléments de tamis (36) l'un par rapport à l'autre, le même trou de tamis d'un élément de tamis (36) forme plusieurs ouvertures de tamis (82) avec plusieurs trous de tamis de l'autre élément de tamis (36).

3. Moissonneuse-batteuse (2) selon la revendication 1 ou 2, **caractérisée en ce qu'**une surface de tamis est subdivisée dans un plan au moins en plusieurs éléments de tamis (36), lesquels sont disposés les uns à côté des autres.

4. Moissonneuse-batteuse (2) selon la revendication 3, **caractérisée en ce que** des parties d'un élément de serrage (26) au moins, lequel maintient les éléments de tamis (36) pressés les uns sur les autres, sont disposées entre des éléments de tamis (36) contigus.

5. Moissonneuse-batteuse (2) selon l'une quelconque des revendications précédentes, **caractérisée en ce qu'**une ou plusieurs tôles profilées (28) dépassantes sont disposées sur l'élément de tamis (36) supérieur.

6. Moissonneuse-batteuse (2) selon l'une quelconque des revendications précédentes, **caractérisée en ce qu'**un élément de serrage (26) est guidé à travers au moins deux éléments de tamis (36) superposés et **en ce que** l'élément de tamis (36) réglable présente un trou oblong (56) afin de guider le mouvement de réglage.

7. Moissonneuse-batteuse (2) selon l'une quelconque des revendications précédentes, **caractérisée en ce que** la force de serrage des éléments de serrage (26) est choisie de telle sorte que les éléments de tamis (36) soient maintenus superposés de manière fixe pendant le fonctionnement normal de la moissonneuse-batteuse (2), mais permette toutefois un déplacement des éléments de tamis (36) superposés les uns par rapport aux autres lors de l'action d'une force de réglage sur au moins un des éléments de tamis (36).

8. Moissonneuse-batteuse (2) selon l'une quelconque des revendications précédentes, **caractérisée en ce que** la force de serrage qu'un élément de serrage (26) exerce sur des éléments de tamis (36) est variable.

9. Moissonneuse-batteuse (2) selon l'une quelconque des revendications précédentes, **caractérisée en ce que** le réglage du tamis a lieu en actionnant un dispositif d'entraînement à moteur (38).

10. Moissonneuse-batteuse (2) selon la revendication 9, **caractérisée en ce que** le dispositif d'entraînement à moteur (38) est fixé à un élément de tamis (36) ou à un cadre d'un élément de tamis (36).

11. Moissonneuse-batteuse (2) selon la revendication 9 ou 10, **caractérisée en ce que** le dispositif d'entraînement à moteur (38) peut être actionné à distance.

12. Moissonneuse-batteuse (2) selon l'une quelconque des revendications précédentes, **caractérisée en ce qu'**un dispositif de guidage de l'écoulement de l'air (48) est disposé entre une soufflerie (20) et les éléments de tamis (36), lequel dispositif dévie l'écoulement de l'air généré par la soufflerie en direction des ouvertures de tamis des éléments de tamis (36).

13. Moissonneuse-batteuse (2) selon la revendication 13, **caractérisée en ce que** le dispositif de guidage de l'écoulement de l'air (48) peut être réglé.

14. Moissonneuse-batteuse (2) selon l'une des revendications 12 ou 13, **caractérisée en ce que** le réglage du dispositif de guidage de l'écoulement de l'air (48) a lieu au moyen d'un moteur pouvant être commandé de préférence à distance.

15. Moissonneuse-batteuse (2) selon l'une quelconque des revendications 12 à 14, **caractérisée en ce que** le dispositif de guidage de l'écoulement de l'air (48) est fixé au groupe de tamis.

16. Moissonneuse-batteuse (2) selon l'une quelconque des revendications 12 à 15, **caractérisée en ce que** plusieurs dispositifs de guidage de l'écoulement de l'air (48) sont disposés de façon répartie sur la longueur du groupe de tamis.

17. Moissonneuse-batteuse (2) selon l'une quelconque des revendications 12 à 16, **caractérisée en ce que** les dispositifs de guidage de l'écoulement de l'air (48) présentent des dimensions et/ou des géométries différentes.

18. Moissonneuse-batteuse (2) selon l'une quelconque des revendications précédentes, **caractérisée en ce qu'**un élément de tamis (36) au moins est renforcé par des bords pliés (58) et/ou des profilés supplémentaires.

19. Moissonneuse-batteuse (2) selon l'une quelconque des revendications précédentes, **caractérisée en ce que** le groupe de tamis (24) est relié sans cadre aux éléments de suspension (74) côté machine par l'intermédiaire d'éléments de couplage (68) fixés directement à un élément de tamis (36) au moins.

20. Groupe de tamis (24) comportant un dispositif de tamisage destiné à être monté dans une moissonneuse-batteuse (2), **caractérisé en ce que** le dispositif de tamisage est constitué d'au moins deux éléments de tamis (36) superposés, lesquels présentent des trous de tamis et sont disposés de manière à pouvoir être déplacés l'un par rapport à l'autre en vue de modifier le degré de tamisage, les éléments de tamis (36) étant maintenus pressés l'un sur l'autre au moyen d'éléments de serrage (26).
